# EUROPÄISCHE PATENTSCHRIFT

(11) **EP 1 072 451 B1**
(45) Veröffentlichungstag und Bekanntmachung des Hinweises auf die Patenterteilung: **19.05.2004**
(21) Anmeldenummer: 00108620.6
(22) Anmeldetag: 20.04.2000
(51) Int. Cl.: B60G 15/06

(54) **Federbeinstützlager**
Strut support bearing
Palier supportant la jambe de suspension

(30) Priorität: 30.07.1999 DE 19935391
(43) Veröffentlichungstag der Anmeldung: 31.01.2001
(73) Patentinhaber: Carl Freudenberg KG, 69469 Weinheim (DE)
(72) Erfinder: Schütz, Michael, 79418 Schliengen (DE)

(56) Entgegenhaltungen:
- DE-A- 4 331 585
- DE-A- 19 755 313
- DE-A- 19 803 174
- US-A- 4 465 296
- US-A- 4 981 287
- PATENT ABSTRACTS OF JAPAN vol. 1997, no. 05, 30. Mai 1997 (1997-05-30) & JP 09 004673 A (BRIDGESTONE CORP), 7. Januar 1997 (1997-01-07)

## Beschreibung

Die Erfindung betrifft ein Federbeinstützlager, entsprechend dem Oberbegriff des Anspruchs 1. Ein solches Federbeinstützlager ist aus der DE19803174 bekannt.

### Stand der Technik

Federbeinstützlager sind allgemein bekannt und bilden beispielsweise einen Teil einer Vorderradaufhängung eines Kraftfahrzeugs.

### Darstellung der Erfindung

Der Erfindung liegt die Aufgabe zugrunde, ein Federbeinstützlager derart weiterzuentwickeln, daß die Anschlagpuffer individuell und bedarfsabhängig vom Anwendungsfall materialunabhängig von dem Federkörperausgelegt werden können, um eine universelle Abstimmung eines solchen Federbeinstützlagers auf die jeweiligen Gegebenheiten und Erfordernisse zu ermöglichen.

Diese Aufgabe wird erfindungsgemäß durch die Merkmale von Anspruch 1 gelöst. Auf vorteilhafte Ausgestaltungen nehmen die Unteransprüche Bezug.

Nach der erfindungsgemäßen Ausgestaltung werden die Anschlagpuffer separat erzeugt und mit der jeweiligen Stirnseite des Innenrings kraft- und/oder formschlüssig verbunden. Hierbei ist von Vorteil, daß die Anschlagpuffer - unabhängig vom Material, aus dem der Federkörper besteht - besonders gut an die jeweiligen Gegebenheiten des Anwendungsfalles angepaßt werden können. Die Anschlagpuffer können beispielsweise auf die Stirnseiten des Innenrings aufgeklebt oder in hinterschnittene, beispielsweise schwalbenschwanzförmige Ausnehmungen des Innenrings einschnappbar sein.

Eine vergleichsweise haltbarere, formschlüssige Verbindung kann dadurch erzielt werden, daß der Innenring zumindest eine sich im wesentlichen in axialer Richtung von Stirnseite zu Stirnseite erstreckende Durchbrechung aufweist und daß die Durchbrechung vom Werkstoff der Anschlagpuffer durchdrungen ist. Eine solche Ausgestaltung ist nur dann sinnvoll, wenn der gummielastische Werkstoff in eine Werkzeugkavität eingespritzt und anschließend zwischen Innenring und Außenring vulkanisiert wird.

Besonders vorteilhafte Gebrauchseigenschaften weisen Anschlagpuffer auf, die aus einem Zell-Polyurethan bestehen. Im Vergleich zu anderen Werkstoffen hat Zell-Polyurethan den Vorteil, daß die Werkstoffdämpfung mit Amplitudenzunahme relativ ansteigt und die dynamische Verhärtung im Vergleich zu Elastomeren allgemein nicht so hoch ist.

Die Anschlagpuffer können auf jeder Seite des Innenrings durch jeweils zumindest drei gleichmäßig in Umfangsrichtung verteilt angeordnete Anschlagnocken gebildet sein. Die Form der Anschlagnocken ist bevorzugt so ausgeführt, daß sich mit zunehmendem Einfederweg eine progressiv ansteigende Federkraft ergibt. Dadurch ist sichergestellt, daß die Anschlagpuffer die Gegenanschlagfläche zunächst weich berühren, beispielsweise um ein Rütteln und starke Geräusche zu vermeiden und sich erst mit zunehmendem Einfederweg eine stärkere Abstützung der beiden Teil aneinander ergibt.

Der Außenring kann ortsfest in einem im wesentlichen topfförmigen Flansch angeordnet sein, wobei der Flansch und die Karosserie ortsfest verbunden sind. Im Hinblick auf die Herstellung von Federbeinstützlager im Baukastensystem ist eine solche Ausgestaltung von Vorteil. Durch verschiedenartig gestaltete Flansche besteht die Möglichkeit, Federbeinstützlager an die jeweilige Einbausituation anzupassen.

### Kurzbeschreibung der Zeichnung

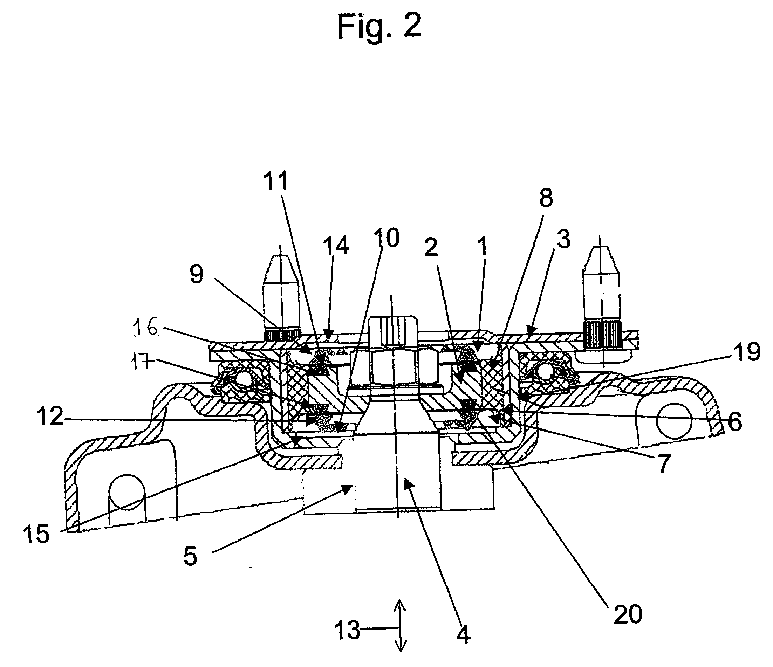

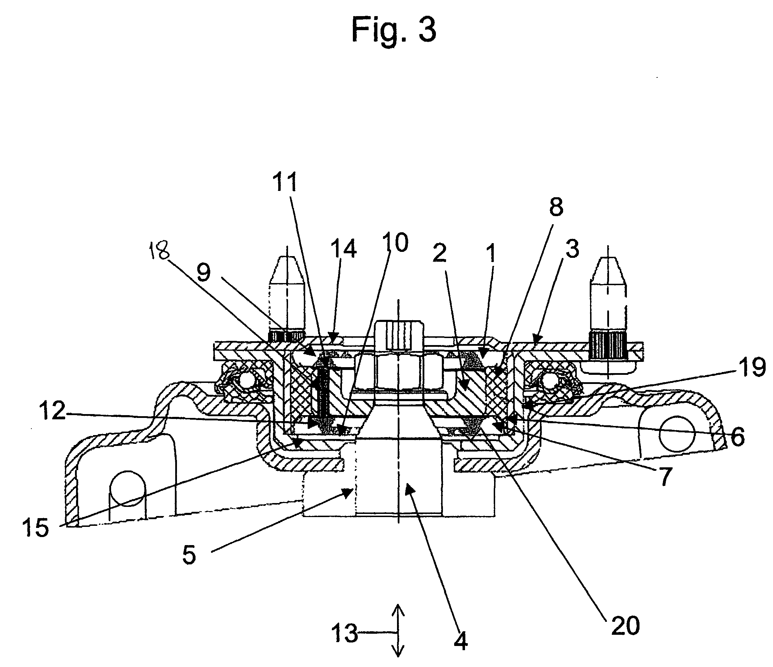

Ein Ausführungsbeispiel des erfindungsgemäßen Federbeinstützlagers wird nachfolgend anhand von Figuren 2 und 3 näher beschrieben.

### Ausführung der Erfindung

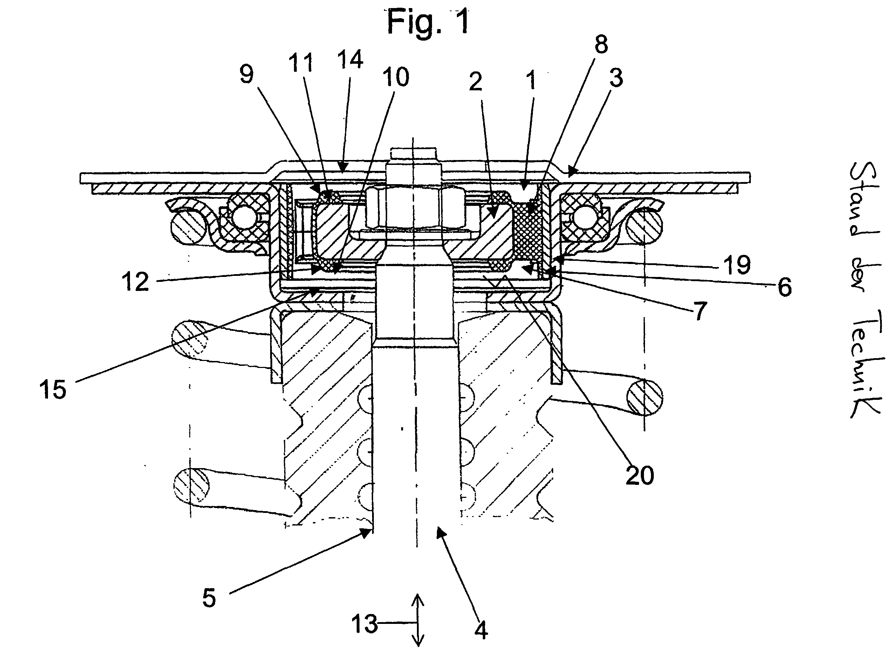

In Figur 1 ist ein Ausführungsbeispiel eines nicht erfindungsgemäßen Federbeinstützlagers gezeigt. Das Federbeinstützlager hat ein Kopflager 1, das aus einem Innenring 2 und einem den Innenring 2 mit radialem Abstand umschließenden Außenring 6 besteht, wobei der Innenring 2 und der Außenring 6 durch den Federkörper 8, der innerhalb des Spalts 7 angeordnet ist, verbunden sind.

Die Anschlagpuffer 11, 12 die auf den Stirnseiten 9, 10 des Innenrings 2 angeordnet sind, sind in diesem Ausführungsbeispiel einstückig ineinander übergehend mit dem Federkörper 8 ausgeführt. Eine davon abweichende Ausgestaltung, die hier ebenfalls zur Anwendung gelangen kann, ist jeweils in den Figuren 2 und 3 gezeigt.

Der Außenring 6 ist in einen topfförmigen Flansch 19 eingepreßt, der unbeweglich mit der Karosserie 3, beispielsweise durch eine Verschraubung oder eine Verschweißung, verbunden ist.

In den Figuren 2 und 3 ist jeweils ein Ausschnitt aus dem Kopflager 1 aus Figur 1 gezeigt, wobei sich die Festlegung der Anschlagpuffer 11, 12 am Innenring 2 von dem zuvor beschriebenen Ausführungsbeispiel unterscheidet.

In Figur 2 sind die Anschlagpuffer 11, 12 separat erzeugt und mit der jeweiligen Stirnseite 9, 10 des Innenrings 2 formschlüssig verbunden. Zusätzlich oder alternativ besteht die Möglichkeit, einen Kraftschluß, beispielsweise durch eine Verklebung, vorzusehen.

In diesem erfindungsgemäßen Ausführungsbeispiel sind die Anschlagpuffer 11, 12 in hinterschnittene Ausnehmungen 16, 17 der jeweiligen Stirnseiten 9, 10 des Innenrings 2 eingeschnappt, wobei die Ausnehmungen 16, 17 jeweils schwalbenschwanzförmig ausgebildet sind.

In Figur 3 weist der Innenring 2 mehrere in Umfangsrichtung verteilte, sich im wesentlichen in axialer Richtung von Stirnseite 9 zu Stirnseite 10 erstreckende Durchbrechungen 18 auf, wobei die Durchbrechungen 18 vom elastomerem Werkstoff der Anschlagpuffer 11, 12 durchdrungen sind. Dadurch wird eine besonders gute Haltbarkeit erreicht.

Die separat ausgebildeten Anschlagpuffer 11, 12 bestehen bevorzugt aus einem Zell-Polyurethan.

Bei extremen Auslenkbewegungen des Innenrings 2 in Bewegungsrichtung 13 relativ zum Außenring 6 gelangen die Anschlagpuffer 11, 12 mit den Gegenanschlagflächen 14, 15 in Berührung, wobei die Gegenanschlagfläche 15 durch den Boden 20 des Flanschs 19 gebildet ist. Der stirnseitig obere Anschlagpuffer 11 berührt die Gegenanschlagfläche 14, die als Deckel ausgebildet ist und einen Bestandteil der Karosserie 3 bildet.

## Patentansprüche

1. Federbeinstützlager, welches folgendes aufweist:
- ein Kopflager (1 ), das mit seinem Innenring (2) am stirnseitigen, dem einer Karosserie (3) zugewandten Ende einer Kolbenstange (4) eines Stoßdämpfers (5) festlegbar ist,
- der Innenring (2) von einem Außenring (6) mit radialem Abstand unter Bildung eines Spalts (7) umschlossen ist,
- zumindest ein Federkörper (8) aus gummielastischem Werkstoff in dem Spalt (7) angeordnet ist,
- der Außenring ortsfest zur Karosserie (3) angeordnet ist,
- der Innenring (2) auf jeder seiner beiden Stirnseiten (9, 10) zumindest einen elastisch nachgiebigen Anschlagpuffer (11, 12) zur Begrenzung extremer Auslenkbewegung in Bewegungsrichtung (13) des Stoßdämpfers (5) aufweist; und
- die Anschlagpuffer (11, 12) jeweils mit Gegenanschlagflächen (14, 15) in Berührung bringbar sind,
**dadurch gekennzeichnet, dass** die Anschlagpuffer (11, 12) separat erzeugt und mit der jeweiligen Stirnseite (9, 10) des Innenrings (2) kraft- und/oder formschlüssig verbunden sind.

2. Federbeinstützlager nach Anspruch 1, **dadurch gekennzeichnet, dass** die Anschlagpuffer (11, 12) in hinterschnittenen Ausnehmungen (16, 17) in den jeweiligen Stirnseiten (9, 10) des Innenrings (2) eingeschnappt sind.

3. Federbeinstützlager nach Anspruch 1 oder 2, **dadurch gekennzeichnet, dass** der Innenring zumindest eine sich im wesentlichen in axialer Richtung von Stirnseite (9) zu Stirnseite (10) erstreckende Durchbrechungen (118) aufweist, und dass die Durchbrechung (18) vom Werkstoff der Anschlagpuffer (11, 12) durchdrungen ist.

4. Federbeinstützlager nach einem der Ansprüche 1 bis 3, **dadurch gekennzeichnet, dass** die Anschlagpuffer (11, 12) aus Zell-Polyurethan bestehen.

5. Federbeinstützlager nach einem der Ansprüche 1 bis 4, **dadurch gekennzeichnet, dass** die Anschlagpuffer (11, 12) auf jeder Stirnseite (9, 10) des Innenrings (2) durch jeweils zumindest drei gleichmäßig in Umfangsrichtung verteilt angeordnete Anschlagnocken gebildet sind.

6. Federbeinstützlager nach einem der Ansprüche 1 bis 5, **dadurch gekennzeichnet, dass** der Außenring (6) ortsfest in einem im wesentlichen topfförmigen Flansch (19) angeordnet ist und dass der Flansch (19) und die Karosserie (3) ortsfest verbunden sind.

7. Federbeinstützlager nach einem der Ansprüche 1 bis 6, **dadurch gekennzeichnet, dass** die Gegenanschlagflächen (14, 15) axial einerseits durch den Boden (20) des Flanschs (19) und axial andererseits durch die Karosserie (3) gebildet sind.

## Claims

1. A spring-strut support bearing, which has the following:
- a head bearing (1) which can be secured with its inner ring (2) to the front end, facing a body (3), of a piston rod (4) of a shock absorber (5),
- the inner ring (2) is surrounded by an outer ring (6) with radial clearance so as to form a gap (7),
- at least one spring body (8) comprising elastomeric material is arranged in the gap (7),
- the outer ring is arranged fixedly in relation to the body (3),
- the inner ring (2) has, on each of its two end faces (9, 10), at least one elastically resilient stop buffer (11, 12) for limiting an extreme deflection movement in the direction of movement (13) of the shock absorber (5); and
- the stop buffer (11, 12) can be brought into contact in each case with counterstop faces (14, 15), **characterized in that** the stop buffers (11, 12) are produced separately and are connected non-positively and/or positively to the respective end face (9, 10) of the inner ring (2).

2. A spring-strut support bearing according to claim 1, **characterized in that** the stop buffers (11, 12) are snapped in undercut recesses (16, 17) in the respective end faces (9, 10) of the inner ring (2).

3. A spring-strut support bearing according to claim 1 or 2, **characterized in that** the inner ring has at least one perforation (18) extending essentially in the axial direction from end face (9) to end face (10), and **in that** the material of the stop buffers (11, 12) penetrates the perforation (18).

4. A spring-strut support bearing according to any of claims 1 to 3, **characterized in that** the stop buffers (11, 12) consist of cellular polyurethane.

5. A spring-strut support bearing according to any of claims 1 to 4, **characterized in that** the stop buffers (11, 12) on each end face (9, 10) of the inner ring (2) are formed in each case by at least three stop bosses arranged so as to be distributed uniformly in the circumferential direction.

6. A spring-strut support bearing according to any of claims 1 to 5, **characterized in that** the outer ring (6) is arranged fixedly in an essentially pot-shaped flange (19), and **in that** the flange (19) and the body (3) are connected fixedly.

7. A spring-strut support bearing according to any of claims 1 to 6, **characterized in that** the counterstop faces (14, 15) are formed axially, on the one hand, by the bottom (20) of the flange (19) and axially, on the other hand, by the body (3).

## Revendications

1. Palier supportant une jambe de suspension, comprenant:
- une crapaudine supérieure (1) qui peut être fixée, avec sa bague intérieure (2), sur l'extrémité frontale, tournée vers une carrosserie (3), d'une tige de piston (4) d'un amortisseur (5),
- la bague intérieure (2) est entourée par une bague extérieure (6) avec une distance radiale formant une fente (7),
- au moins un corps élastique (8) en matériau élastomère est situé dans la fente (7),
- la bague extérieure est placée de manière fixe par rapport à la carrosserie (3),
- la bague intérieure (2) est pourvue, sur chacun de ses deux côtés frontaux (9, 10), d'au moins un tampon de butée (11, 12) élastique et flexible servant à limiter les mouvements de déviation extrême dans la direction de mouvement (13) de l'amortisseur (5) et
- les tampons de butée (11, 12) peuvent être mis en contact, respectivement, avec des surfaces de contre-butée (14, 15),
**caractérisé en ce que** les tampons de butée (11, 12) sont produits séparément et reliés au côté frontal respectif (9, 10) de la bague intérieure (2) par friction et/ou par conjugaison de forme.

2. Palier supportant une jambe de suspension selon la revendication 1, **caractérisé en ce que** les tampons de butée (11, 12) sont emboîtés dans des évidements sous forme de contre-dépouilles (16, 17) dans les côtés frontaux respectifs (9, 10) de la bague intérieure (2).

3. Palier supportant une jambe de suspension selon la revendication 1 ou 2, **caractérisé en ce que** la bague intérieure est pourvue d'au moins une découpure (18) s'étendant essentiellement dans la direction axiale du côté frontal (9) au côté frontal (10) et **en ce que** la découpure (18) est traversée par le matériau des tampons de butée (11, 12).

4. Palier supportant une jambe de suspension selon l'une des revendications 1 à 3, **caractérisé en ce que** les tampons de butée (11, 12) sont en polyuréthane cellulaire.

5. Palier supportant une jambe de suspension selon l'une des revendications 1 à 4, **caractérisé en ce que** les tampons de butée (11, 12) sont formés, sur chaque côté frontal (9, 10) de la bague intérieure (2), par au moins trois cames de butée à chaque fois, réparties de manière uniforme dans la direction circonférentielle.

6. Palier supportant une jambe de suspension selon l'une des revendications 1 à 5, **caractérisé en ce que** la bague extérieure (6) a une position fixe dans une bride (19) ayant essentiellement la forme d'un pot et **en ce que** la bride (19) et la carrosserie (3) sont reliées fixement.

7. Palier supportant une jambe de suspension selon l'une des revendications 1 à 6, **caractérisé en ce que** les surfaces de contre-butée (14, 15) sont formées d'un côté axial par le fond (20) de la bride (19) et de l'autre côté axial par la carrosserie (3).
